# EUROPEAN PATENT SPECIFICATION

(11) **EP 3 710 241 B1**
(45) Date of publication and mention of the grant of the patent: **12.07.2023**
(21) Application number: 18782948.6
(22) Date of filing: 02.10.2018
(51) Int. Cl.: B29D 99/00, D06F 37/26

(54) **A BELLOWS SUITABLE FOR USE IN WASHING MACHINES AND THE PRODUCTION METHOD THEREOF**
EIN BALG, DER ZUR VERWENDUNG IN WASCHMASCHINEN GEEIGNET IST, UND DESSEN HERSTELLUNGSVERFAHREN
UN SOUFFLET APPROPRIÉ POUR ÊTRE UTILISÉ DANS DES MACHINES À LAVER ET SON PROCÉDÉ DE FABRICATION

(30) Priority: 14.11.2017 TR 201717930
(43) Date of publication of application: 23.09.2020
(73) Proprietor: Arçelik Anonim Sirketi, 34445 Istanbul (TR)
(72) Inventor: KABA, Aybuke, 34950 Istanbul (TR); BAKIRHAN, Omer Seyhun, 34950 Istanbul (TR); KIRAZ, Hulya, 34950 Istanbul (TR); PALIGRAT, Cetin, 34950 Istanbul (TR)
(86) International application number: PCT/EP2018/076781
(87) International publication number: WO 2019/096484

(56) References cited:
- EP-A1- 1 589 143
- EP-A1- 1 589 143
- DE-B3-102007 022 882
- DE-B3-102007 022 882
- US-A- 2 613 837
- US-A- 2 613 837
- US-A1- 2014 069 147
- US-A1- 2015 152 967
- US-A1- 2015 152 967

## Description

The present invention relates to a bellows suitable for use in washing machines, providing insulation between the body and the tub, and to the production method of said bellows.

In washing machines, the laundry is loaded into a drum through an opening provided on the body and washed by rotating the drum inside a tub filled with washing liquid. The insulation between the opening and the tub is provided by means of an accordion-shaped bellows that is manufactured from a flexible material and that surrounds the opening. In the state of the art, the bellows is produced by the injection method by injecting the elastic material into an injection mold and enabling the same to take the form of the mold. However, this method is laborious and expensive since each bellows used in different types of washing machines with different capacities requires a different mold.

In the state of the art European Patent Document No. EP1674236, a bellows production method is disclosed.

In the state of the art United States Patent Document No. US2613837, a washing machine having a resiliently supported tub structure is disclosed.

In the state of the art United States Patent Document No. US2015152967, a seal and method of forming the seal is disclosed.

The aim of the present invention is the realization of a production method wherein the production of the bellows is facilitated.

Another aim of the present invention is the realization of a bellows with decreased production costs.

In the production method realized in order to attain the aim of the present invention explicated in the first claim and the respective claims thereof, the bellows is suitable for use in a washing machine comprising a body, a drum arranged inside the body and wherein the laundry to be washed is placed, a loading port that is arranged on the body and that provides access into the drum and a tub having an opening aligned with the loading port and wherein the drum is rotated around a horizontal rotation axis, the bellows being produced by passing an extrudable base material through an extrusion mold and connecting the two ends of an elastic strip that is formed as a long line with a cross section that fits the form of the mold such that a cylindrical structure is obtained. The elastic strip that exits the extrusion mold as a continuous sheet is cut in desired lengths so as to match the diameter of the opening and the peripheral bellows is obtained by joining the short edges of the elastic strip in a surface-to-surface manner by means of a suitable connection method such as riveting, welding, etc. Thus, the elastic strip with the required length for a plurality of bellows can be produced at once and the production time is substantially decreased.

In an embodiment of the present invention, the two edges of the elastic strip are welded to each other by butt-welding. Thus, the ends of the elastic strip are enabled to be robustly joined together and the durability of the bellows is increased.

In an embodiment of the present invention, the elastic strip has a constant cross-sectional area along its length. Thus, the bellows is enabled to be symmetrical and mounting process is facilitated.

In an embodiment of the present invention, the bellows produced from an elastic material has at least one bent portion remaining between a first edge section that is connected to the body so as to surround the loading port and a second edge section that is connected to the tub so as to surround the opening. Thus, the cylindrical bellows is enabled to be flexible in all directions and the tensile forces and the frictional forces acting on the bellows and especially on the connection region where the ends of the elastic strip are joined together are enabled to be substantially decreased. Thus, the durability of the bellows is increased.

By means of the present invention, a bellows that has a regular and symmetrical form, suitable for use in washing machines having loading ports/opening with different diameters is enabled to be produced in a quick and simple manner.

The bellows realized in order to attain the aim of the present invention is illustrated in the attached figures, where:

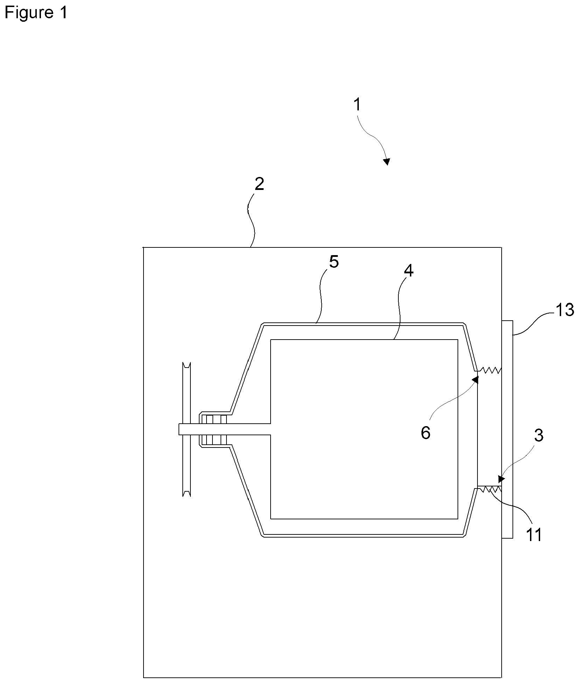

Figure 1 - is the schematic view of the bellows and the washing machine related to an embodiment of the present invention.

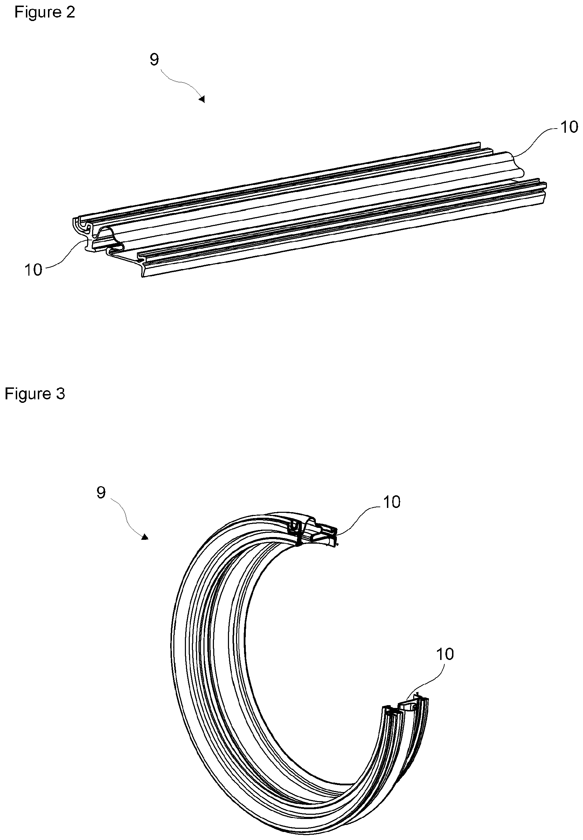

Figure 2 - is the view of the elastic strip related to an embodiment of the present invention.
Figure 3 - is the view of the elastic strip in another embodiment of the present invention, before the ends thereof are joined together.

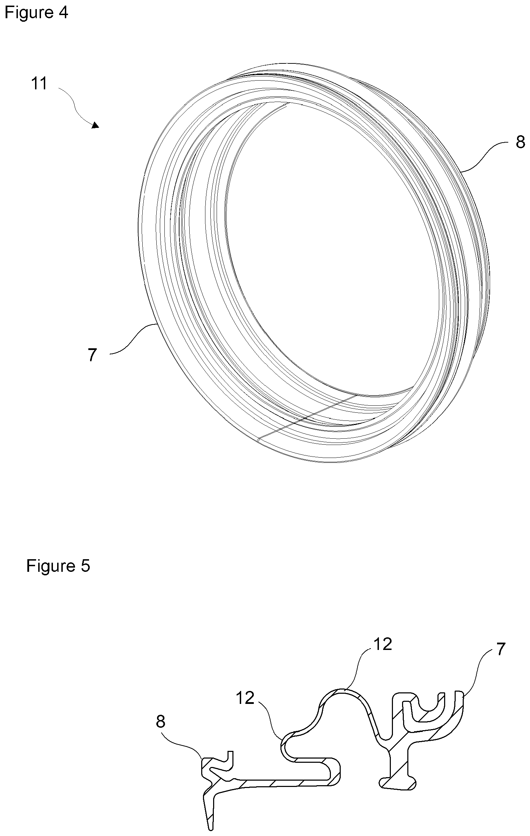

Figure 4 - is the view of the bellows in another embodiment of the present invention.
Figure 5 - is the cross-sectional view of the bellows in another embodiment of the present invention.

The elements illustrated in the figures are numbered as follows:
1. Washing machine
2. Body
3. Loading port
4. Drum
5. Tub
6. Opening
7. First edge section
8. Second edge section
9. Elastic strip
10. End
11. Bellows
12. Bent portion

The production method of the present invention is used for producing a flexible bellows (11) that is suitable for use in the washing machine (1), and comprises the steps of
- providing an extrudable base material
- obtaining an elastic strip (9) by extruding the base material as a continuous strip by the extrusion method, and
- obtaining the bellows (11) by joining the two ends (10) of the elastic strip (9) such that the elastic strip (9) takes the form of a ring. The bellows (11) is obtained by connecting two ends (10) of an elastic strip (9) that is formed by shaping the base material (not shown in figures) as an elongated elastic strip by being drawn in an extrusion mold (not shown in figures). The base material in paste form, for example EPDM (ethylene propylene diene monomer) or TPE (thermoplastic elastomer) is passed through the extrusion mold and the elastic strip (9) that is a long and narrow strip with a cross-section matching that of the extrusion mold is obtained. The ends (10) of the elastic strip (9) that are the narrow edges thereof are fixed to each other by means of a suitable connection method in a surface-to-surface manner. Thus, the bellows (11) with the desired diameter can be produced without the need for changing the mold and the production costs are efFectively decreased.

In an embodiment of the present invention, the production method further comprises the step of cutting the elastic strip (9) at a predetermined length, performed after the step of obtaining the elastic strip (9). The elastic strip (9) is produced so as to have a length greater than the circumference of a single bellows (11) and is divided into a plurality of pieces by being cut at predetermined lengths such that the length of each piece almost equals to the circumference of a bellows (11). Thus, the bellows (11) is obtained by connecting the ends (10) of the elastic strip (9) that is cut to have a predetermined length based on the circumference of the bellows (11) to be produced. This embodiment is advantageous in that savings in time and cost are provided in the production of the bellows (11) especially when bellows (11) with different diameters are produced at the same time.

In an embodiment of the present invention, the ends (10) of the elastic strip (9) are connected to each other by butt welding. The bellows (11) is obtained by means of connecting the ends (10) of the elastic strip (9) that are the narrow edges thereof by butt welding. Thus, the need for using additional parts in the connection process is eliminated, and the part of the elastic strip (9) where the ends (10) are joined together is enabled to have high strength.

In the present invention, the base material is extruded at a constant thickness such that the elastic strip (9) has a constant wall thickness along its length. The base material is drawn in the mold such that the elastic strip (9) has an almost constant cross-section area from one end (10) to the other end (10). Thus, the wall thickness of the bellows (11) is kept almost constant in the radial direction, and the bellows (11) gains a symmetrical form independent of the diameter thereof. Consequently, a plurality of symmetrical bellows (11) with different diameters can be produced using a single elastic strip (9), providing ease of production.

In the present invention, the base material is extruded such that the elastic strip (9) has a wall thickness of less than 1.1 mm. By producing the bellows (11) using an elastic strip (9) formed by extrusion molding, the formation of defects that may be occur in the state of the art production method such as warpage, sink marks, bubbles, etc. is prevented, and the bellows (11) is enabled to have high strength. Thus, the bellows (11) can be advantageously produced with a thickness of less than 1.1 without compromising its durability, and the production costs are reduced.

The bellows (11) of the present invention is produced by means of the method described above.

In an embodiment of the present invention, the bellows (11) comprises at least one U-shaped bent portion (12) that extends in the radial direction almost along the entire length of the bellows (11). At least one bent portion (12) is provided between the long edges of the elastic strip (9). Thus, the bellows (11) becomes flexible and the tensile force acting on the ends (10) of the bellows (11) that are connected to each other is decreased. In a preferred version of this embodiment, the bellows (11) has two bent portions (12) that are positioned end-to-end. Thus, the surfaces of the bellows (11) are advantageously positioned away from each other and are prevented from being folded over each other or from rubbing against each other during the compression and stretching movements. Consequently, the deformations that may occur especially in the joints of the ends (10) are minimized.

The washing machine (1) of the present invention comprises the above-described bellows (11). The washing machine (1) comprises a body (2); a loading port (3) arranged on the body (2); a drum (4) that is disposed arranged in the body (2) and wherein the laundry is loaded through the loading port (3); a tub (5) wherein the drum (4) is placed, and an opening (6) that is provided on the tub (5) and that is almost aligned with the loading port (3). The bellows (11) is a ring-formed structure wherein the long edges of the elastic strip (9) form a first edge section (7) and a second edge section (8), and the first edge section (7) and the second edge section (8) are mounted to the washing machine (1) by being fixed onto the body (2) and the tub (5) so as to respectively surround the edges of the loading port (3) and the opening (6).

By means of the present invention, by producing the bellows (11) using the elastic strip (9) produced as a continuous structure by the extrusion method, the formation of production defects that directly affect the strength are substantially prevented and the formation of defects such as tearing, puncturing or folding that may occur on the bellows (11) are prevented. Moreover, by means of the present invention, by enabling the elastic strip (9) to be produced at a length greater than the circumference of the loading port (3) or the circumference of the opening (6) and afterwards to be cut into pieces at the desired length, the need for using a plurality of molds for the production of bellows (11) with different diameters is eliminated. Thus, the bellows (11) with different diameters are produced by cutting the elastic strip (9) produced in a single extrusion mold into pieces at the desired lengths. Consequently, the mold cost is reduced and the time spent for changing molds is saved.

## Claims

1. A production method that is used for manufacturing a flexible bellows (11) that is suitable for use in a washing machine (1) and that provides insulation between body and tub, the method comprising the steps of
• providing an extrudable base material
• obtaining an elastic strip (9) by extruding the base material as a continuous strip by an extrusion method, and
• after obtaining the elastic strip (9), cutting the elastic strip (9) into pieces at a predetermined length
• obtaining the bellows (11) by joining the two ends (10) of the elastic strip (9) such that the elastic strip (9) takes the form of a ring
**characterized by** extruding the base material at a constant thickness such that the elastic strip (9) has a constant wall thickness of less than 1.1 mm along its length.

2. A production method as in Claim 1, **characterized by** connecting the ends (10) of the elastic strip (9) by butt welding.

3. A bellows (11) **characterized by** being produced by means of a production method as in any one of the above claims.

4. A bellows (11) as in Claim 3, **characterized by** at least one U-shaped bent portion (12) that extends in the radial direction almost along the entire length of the bellows (11).

5. A washing machine (1) comprising a bellows (11) as in Claim 3 or Claim 4.

## Patentansprüche

1. Ein Herstellungsverfahren, das zur Herstellung eines flexiblen Faltenbalgs (11) verwendet wird, der zur Verwendung in einer Waschmaschine (1) geeignet ist und eine Isolierung zwischen Körper und Laugenbehälter bereitstellt, umfasst folgende Schritte:
• Bereitstellen eines extrudierbaren Basismaterials
• Erhalten eines elastischen Streifens (9) durch Extrudieren des Basismaterials als einen kontinuierlichen Streifen durch ein Extrusionsverfahren, und
• ach Erhalt des elastischen Streifens (9), Schneiden des elastischen Streifens (9) in Stücke mit einer vorbestimmten Länge
• Erhalten des Faltenbalgs (11) durch Verbinden der zwei Enden (10) des elastischen Streifens (9), so dass der elastische Streifen (9) die Form eines Rings annimmt
**gekennzeichnet ist es durch** das Extrudieren des Basismaterials mit einer konstanten Dicke, so dass der elastische Streifen (9) entlang seiner Länge eine konstante Wanddicke von weniger als 1,1 mm aufweist.

2. Ein Herstellungsverfahren, wie in Anspruch 1 aufgeführt, **ist dadurch gekennzeichnet, dass** ein Verbinden der Enden (10) des elastischen Streifens (9) durch Stumpfschweißen erfolgt.

3. Ein Faltenbalg (11), **ist dadurch gekennzeichnet, dass** er mittels eines Herstellungsverfahrens nach einem der obigen Ansprüche hergestellt ist.

4. Ein Faltenbalg (11), wie in Anspruch 3 aufgeführt, ist **dadurch gekennzeichnet, dass** sich mindestens ein U-förmiger Abschnitt (12) in radialer Richtung nahezu über die gesamte Länge des Faltenbalgs (11) erstreckt.

5. Eine Waschmaschine (1) umfasst einen Faltenbalg (11) gemäß Ansprüche 3 und 4.

## Revendications

1. Un procédé de production utilisé pour fabriquer un soufflet flexible (11) convenant à une utilisation dans une machine à laver (1) et assurant l'isolation entre la carrosserie et la baignoire, le procédé comprenant les étapes suivantes
• fournir un matériau de base extrudable
• obtenir une bande élastique (9) en extrudant le matériau de base sous forme de bande continue par une méthode d'extrusion, et
• après avoir obtenu la bande élastique (9), couper la bande élastique (9) en morceaux d'une longueur prédéterminée
• obtenir le soufflet (11) en joignant les deux extrémités (10) de la bande élastique (9) de manière à ce que la bande élastique (9) prenne la forme d'un anneau
**caractérisé par** l'extrusion du matériau de base à une épaisseur constante de sorte que la bande élastique (9) présente une épaisseur de paroi constante inférieure à 1,1 mm sur toute sa longueur.

2. Un procédé de fabrication selon la déclaration 1, **caractérisé par** le fait de relier les extrémités (10) de la bande élastique (9) par soudage bout à bout.

3. Un soufflet (11) **caractérisé par le fait qu'**il est produit au moyen d'un procédé de fabrication tel que dans l'une quelconque des déclarations précédentes.

4. Un soufflet (11) selon la déclaration 3, **caractérisé par** au moins une partie coudée en forme de U (12) qui s'étend dans la direction radiale presque sur toute la longueur du soufflet (11).

5. Une machine à laver (1) comprenant un soufflet (11) selon la déclaration 3 ou la déclaration 4.
